# EUROPEAN PATENT APPLICATION

(11) **EP 4 216 083 A1**
(43) Date of publication of application: **26.07.2023**
(21) Application number: 22185009.2
(22) Date of filing: 14.07.2022
(51) Int. Cl.: G06F 21/35, H04L 9/40, H04W 4/80, H04W 12/03, H04W 12/06, H04W 12/10, H04W 12/50

(54) **A BLUETOOTH COMMUNICATION METHOD AND SYSTEM**

(30) Priority: 25.01.2022 US 202263302744 P
(71) Applicant: EM Microelectronic-Marin SA, 2074 Marin (CH); Robert Bosch GmbH, 70469 Stuttgart (DE)
(72) Inventor: GUILLOUX, Julian, 2013 Colombier (CH); SALGADO, Stéphanie, 2520 La Neuveville (CH); RUECKER, Marcel, 70499 Stuttgart (DE); NAGEL, Joachim, 72770 Reutlingen (DE); RAVIER, Yann, 72070 Tübingen (DE)
(74) Representative: ICB SA

(57) **Abstract**

The method concerns a Bluetooth communication method implemented between a first electronic device (101) and a second electronic device (102), this second electronic device (102) being capable of sending a secure message comprising data to be processed by the first electronic device (101), the method comprising:
- obtaining (20) at least one security key by each of the first and second electronic devices (101, 102);
- transmitting (38) the secure message by the second electronic device (102) to the first electronic device (101) comprising establishing (44) a communication link in a Bluetooth advertising mode between these first and second devices (101, 102).

## Description

### Field of the invention

The present invention relates to a method and apparatus for forming a connection between devices using the Bluetooth, which is a short distance technique in wireless communication systems, and more particularly to a Bluetooth communication method and system implemented between first and second electronic devices for notably continuously process data such as phenomenon data or notification data.

### Background of the invention

Bluetooth is a technology standard allowing various devices to be wirelessly connected in a near field to exchange data. The Bluetooth communication method may be classified as a Basic Rate/Enhanced Data Rate (known by the acronym "BR/EDR") method and a Low Energy (known by the acronym "LE") method. The BR/EDR method may be termed Bluetooth Classic. The Bluetooth Classic method includes a Bluetooth technology led from Bluetooth 1.0 and a Bluetooth technology using an enhanced data rate (known by the acronym "EDR") supported by Bluetooth 2.0 or a subsequent version.

A Bluetooth low energy (known by the acronym "LE") technology applied, starting from Bluetooth 4.0, may stably provide information of hundreds of kilobytes (KB) at low power consumption. Such a Bluetooth low energy technology allows devices to exchange information with each other by utilizing an attribute protocol. The Bluetooth LE method may reduce energy consumption by reducing overhead of a header and simplifying an operation.

In the prior art it is known to implement a Bluetooth communication method to monitor phenomenon data relating for example to physical quantities such as tire pressure measurement in a Tire Pressure Monitoring Systems (known by the acronym " TPMS"). In this kind of system, each tire contains a tiny embedded electronic device such as a TPMS sensor. This TPMS sensor is configured to communicate with a vehicle electronic control unit (known by the acronym "ECU") in order to send to this latter during a step of transmitting of this method, tire pressure measurement via an operating mode of the Bluetooth standard referred to as advertising mode.

However, one of the drawbacks of such method is that it is very vulnerable because of a non-secure transmission of these tire pressure measurement thus exposing the TPMS system at all kind of malicious attacks.

In order to overcome such a drawback, a solution in the state of the art provides that this tire pressure measurement is sent to the ECU during a step of transmitting of this method implementing a secure operating mode of the Bluetooth standard referred to as connected mode. Nonetheless, such connected mode generates particularly in this kind of use a high power consumption making unsuitable for the tiny embedded device like this TPMS sensor, which requires a very low power consumption.

It is therefore understood that there is a need to find an alternative solution, in particular which does not have the drawbacks of the prior art.

### Summary of the invention

In this context, embodiments of the present disclosure provide.

To this end, the invention relates to a Bluetooth communication method implemented between a first electronic device and a second electronic device, this second electronic device being capable of sending a secure message comprising data to be processed by the first electronic device, the method comprising:
- obtaining at least one security key by each of the first and second electronic devices;
- transmitting the secure message by the second electronic device to the first electronic device comprising establishing a communication link in a Bluetooth advertising mode between these first and second devices.

In other embodiments:
- the step of obtaining comprises:
   ➢ a sub-step of establishing a communication link in a Bluetooth connected mode between the first and second devices, this sub-step comprising a phase of pairing (22) of the first device with the second device, and
   ➢ a sub-step of exchanging the said at least one security key between these first and second devices , the said at least one security key being:
      - initially stored in the first or second device, or
      - a key generated during the phase of pairing, or
      - derived from that key generated;
- the step of obtaining comprises:
   ➢ a sub-step of establishing a communication link in a Bluetooth connected mode between the first and second devices, and
   ➢ a sub-step of generating the said at least one security key by the first and the second devices by implementing a key agreement protocol;
- the step of obtaining comprises:
   ➢ a sub-step of establishing a communication link between the first and second devices from a wired technology or a wireless technology standard different from the Bluetooth standard, and
   ➢ a sub-step of generating the said at least one security key by the first and the second devices by implementing a key agreement protocol;
- the step of obtaining comprises:
   ➢ a sub-step of establishing a communication link between the first and second devices from a wired technology or a wireless technology standard different from the Bluetooth standard, and
   ➢ a sub-step of exchanging the said at least one security key between these first and second devices, the said at least one security key being:
      - initially stored in the first or second device, or
      - a key generated during a phase of pairing when the step of obtaining comprises a previous phase of pairing implemented between the first and second devices, or
      - derived from that key generated;
- the step of obtaining comprises:
   ➢ a sub-step of establishing a communication link in a Bluetooth connected mode between the first, second and third devices, this sub-step including a phase of pairing of the third device with the first electronic device and the second electronic device, and
   ➢ a sub-step of exchanging the said at least one security key through the communication link between the first and second devices through the third electronic device;
- the step of obtaining comprises:
   ➢ a sub-step of establishing a communication link between the first, second and third devices from a selection of a communication technology carried out by each of these devices among a secure wired technology or a secure wireless technology different from the Bluetooth technology or a Bluetooth technology, and
   ➢ a sub-step of exchanging the said at least one security key through the communication link between the first and second devices through the third electronic device;
- the sub-step of exchanging is replaced by a sub-step of distributing the said at least one security key by the third electronic device to the first and second devices through the communication link.
- the step of transmitting comprises:
   ➢ a sub-step of realisation of a message comprising a payload including data relating to phenomenon data or notification data, and
   ➢ a sub-step of designing the secure message by using the said at least one security key and the payload.
- the sub-step of designing comprises:
   ➢ a phase of computing a secure tag by implementing a tag algorithm using the said at least one security key and the payload, and
   ➢ a phase of generating the secure message by appending the computed tag to the payload, or
   ➢ a phase of generating the secure message by appending the computed tag to the encrypted payload.
   ➢ a phase of generating the secure message by encrypting the computed tag appended to the payload, or
- the method comprises a step of processing the data comprised in the secure message received by the first device from the second device;
- the step of processing comprises:
   ➢ a sub-step of extracting the payload from the secure message received , and
   ➢ a sub-step of generating useful information based on the data contained in the payload of this secure message.

The invention also relates to a Bluetooth communication system implemented between a first electronic device and a second electronic device, this second electronic device being capable of sending a secure message comprising data to be processed by the first electronic device, the system comprising these first and second devices and configured to:
- obtaining at least one security key by each of the first and second electronic devices;
- transmitting the secure message by the second electronic device to the first electronic device comprising establishing a communication link in a Bluetooth advertising mode between these first and second devices.

Advantageously, the system comprises the first and second devices and also a third electronic device, the system being configured to:
- exchanging the said at least one security key through the communication link between the first and second devices through the third electronic device, or
- distributing the said at least one security key by the third electronic device to the first and second devices through the communication link.

### Brief description of the drawings

The present invention will be described subsequently in more detail with reference to the attached drawing, given by way of examples, but in no way limited thereto, in which:
- Figure 1 is a schematic representation of a Bluetooth communication system implemented between first and second electronic devices according to the present invention;
- Figure 2 is a schematic representation of a variant of the Bluetooth communication system that is implemented between first, second and third electronic devices according to the present invention;
- Figure 3 is a schematic diagram of a Bluetooth communication method according to the present invention;
- Figure 4 is a flowchart illustrating a first embodiment of a step of obtaining at least one security key of this method according to the present invention;
- Figure 5 is a flowchart illustrating a second embodiment of the step of obtaining of this method according to the present invention;
- Figure 6 is a flowchart illustrating a third embodiment of the step of obtaining of this method according to the present invention;
- Figure 7 is a flowchart illustrating a fourth embodiment of the step of obtaining of this method according to the present invention, and
- Figures 8 and 9 are flowcharts illustrating a fifth embodiment of the step of obtaining of this method according to the present invention.

### Detailed description of the invention

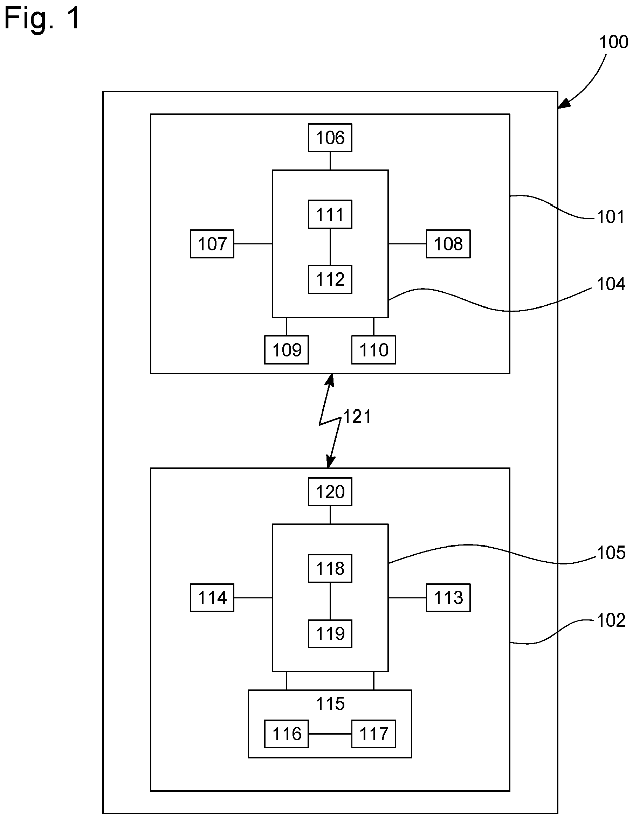

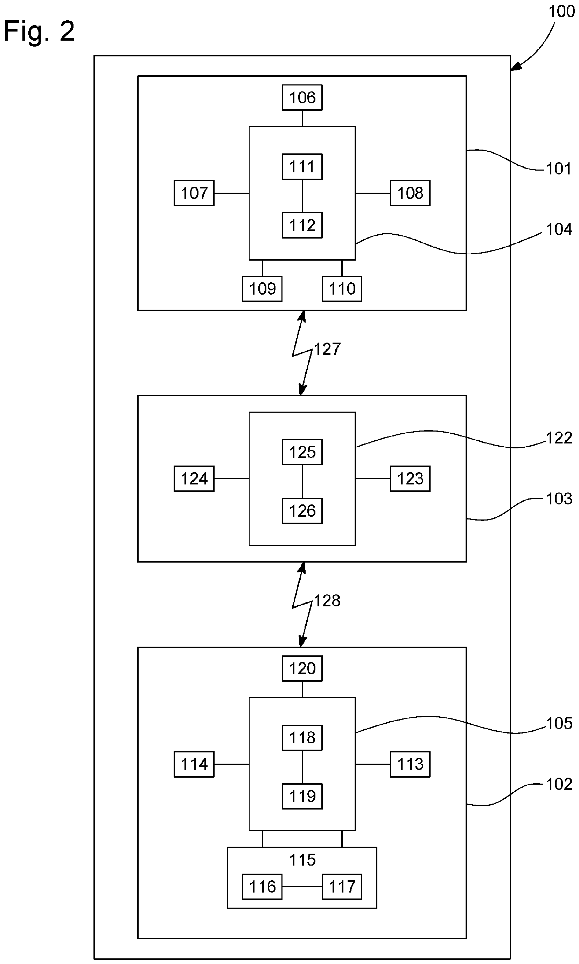

In the different embodiments of the invention illustrated in the Figures 1 and 2, a near field communication method and system 100 and more particularly a Bluetooth communication method and system 100 are disclosed for providing messages and managing the exchanges of these messages between first and second electronic devices 101, 102. More specifically, these method and system 100 contribute to realise message exchanges between these two electronic devices101, 102 in an operating mode of the Bluetooth standard referred to as advertising mode. In particular, the Bluetooth communication method and system 100 allow the second device 102 to securely advertise these messages to the first device 101.

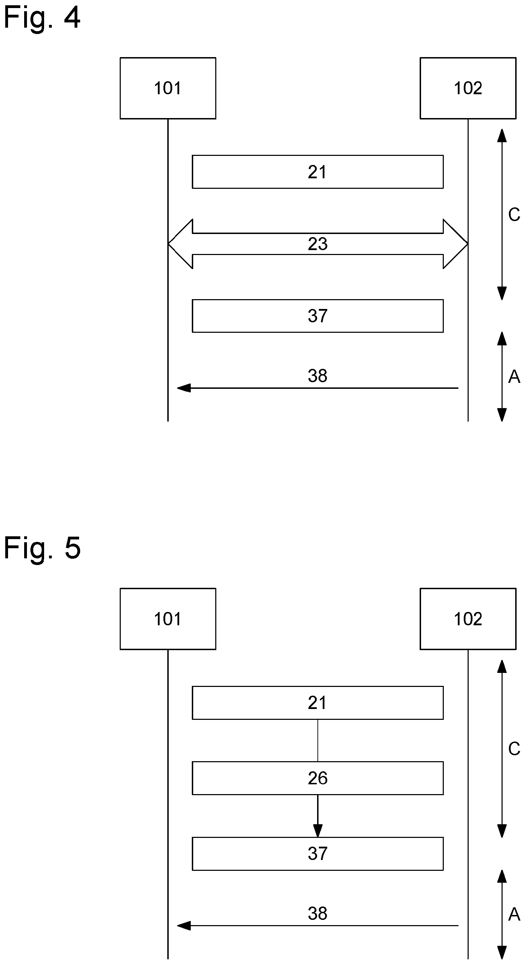

This Bluetooth advertising mode referenced A in the Figures 4 to 9, is here a different mode to establish a Bluetooth communication namely by non-connectable undirected advertising. The difference between two devices connected mode referenced as C in the Figures 4 to 9 mode versus an advertising mode is that the connected mode allows bi-directional data transfer between the two devices. On the other hand, a device in an advertising mode is not able to receive any data in that state. One exception is that an advertising device is able to respond to a "scan request" packet. In the prior art, the advertising mode is not a secure transmission mode.

In this context, the message advertised is a secure message whom the integrity, authenticity and/or confidentiality is ensured by these Bluetooth communication method and system 100. Such a message contains preferably a payload including useful data, which can be, processed continuously, for instance periodically.

This useful data can be for example phenomenon data also called event data. These phenomenon data can comprise physical and/or biological values. Such values are relating to physical quantities or biological quantities. It can be understood that a physical quantity is included in the field of physical sciences and a biological quantity in the field of the life sciences (also called "biology"). These values have been figured out by the second device 102 from at least one measurement of the physical quantity or the biological quantity evaluated by the at least one data generator of this device 102.

Furthermore, these useful data can also be notification data. These data include alphanumeric characters relating to an informative communication. This informative communication can contain alert communication, news communication, event communication, etc...

In the system 100, the first electronic device 101 can be in a non-limiting and/or non-exhaustive manner a vehicle electronic control unit, an Internet server, a router, a desktop or laptop computer, a smartphone, a tablet, a processor, a module, or the like, and may be implemented in various forms, including, for example, an integrated circuit or collection thereof, a printed circuit board or collection thereof, or in a discrete housing/package/rack or multiple of the same.

This first device 101 comprises in a non-limiting and/or non-exhaustive manner:
- a processing unit 104 (also referred to as a "controller") including hardware and software resources, in particular at least one processor 111 cooperating with memory elements 112;
- a Bluetooth communication interface 109, and
- a wired and a wireless communication interfaces 110 not compatible with the Bluetooth standard.

In this configuration, the processing unit 104 is connected to the Bluetooth communication interface 109, and the wired and the wireless communication interfaces 110 not compatible with the Bluetooth standard.

This first device 101 can also comprise an interface 107 for broadcasting a visual piece of information such as a digital display, an interface 108 for broadcasting an audio piece of information such as a loudspeaker and an input interface 106 such as a touch interface comprised in, for example, the interface for broadcasting a visual piece of information.

It can be noted, that this first device 101 can be configured to receive signals from one or more second devices 102, to process the received signals and to control the said one or more second devices 102 via control signals.

This second device 102 includes in a non-limiting and/or non-exhaustive manner:
- a processing unit 105 (also referred to as a "controller") including hardware and software resources, in particular at least one processor 118 cooperating with memory elements 119;
- a Bluetooth communication interface 114;
- a wired and a wireless communication interfaces 113 not compatible with the Bluetooth standard;
- at least one data generator 120, and
- a data generator circuit 115 which may be referred to as a signal processing circuit 116 and/or a signal conditioning circuit 117 that receives this electric signal from the at least one data generator 120 in the form of raw measurement data.

In this second device 102, the processing unit 105 is connected to the Bluetooth communication interface 114, the wired and the wireless communication interfaces 113 not compatible with the Bluetooth standard and the data generator circuit 115 which is connected to the at least one data generator 120.

In this configuration, the data generator 120 is preferably a sensor. This sensor is an element capable to convert a physical quantity or a biological quantity to be measured to an electric signal (also called "sensor signal"). Such a physical quantity can be for example a tire pressure of a vehicle in a context of Tire Pressure Monitoring System (known by the acronym "TPMS"), or atmospheric pressure and air temperature monitoring for a weather forecasting system, etc... Regarding biological quantity, it can be for example a heart rate and a blood pressure monitored in the context of electrocardiography system. Sensors can also measure insulin rate, brain signal etc... Other applications can be in the field of agriculture where moisture rate, chemical properties of the soil are measured. Other sensors are present in the fire protection and safety area. Sensors detect the presence of radioactivity, gas such as monoxide of carbon, nanoparticles, etc...

Alternatively, this data generator 120 can be a wireless communication device such a transponder for example a car key fob to unlock a vehicle wirelessly. In the consumer area, connected wearables such as connected watches are typical examples of devices that receive notifications, calls, messages and other data generated by a smartphone.

In this second device 102, the data generator circuit 115 may include an analog-to-digital converter (known by the acronym "ADC") that converts the analog signal from the value relating to a physical quantity or a biological quantity to a digital signal. The data generator circuit may also include a digital signal processor (known by the acronym "DSP") that performs some processing on the digital signal (e.g., to prepare physical or a biological quantity value for transmission). Therefore, the data generator package comprises a circuit which conditions and amplifies the small signal of this value via signal processing and/or conditioning. Signal conditioning, as used herein, refers to manipulating an analog signal in such a way that the signal meets the requirements of a next stage for further processing. Signal conditioning may include converting from analog to digital (e.g., via an analog-to-digital converter), amplification, filtering, converting, biasing, range matching, isolation and any other processes required to make a data generator output suitable for processing after conditioning.

In the first and second devices 101, 102, the processing unit 104, 105 can implement:
- tag algorithms,
- cryptographic algorithms such as the Diffie-Hellman algorithm, and/or
- encryption algorithms such as an Advanced Encryption Standard (known by the acronym "AES") and the corresponding decryption algorithms, which are stored in their memory element 112, 119.

In this context, these tag algorithms comprises for example:
- a MAC algorithm such as an Advanced Encryption Standard Cipher-based Message Authentication Code algorithm (known by the acronym "AES-CMAC") or Hash-Based Message Authentication Code algorithm (known by the acronym "HMAC") in order to compute this tag based on the said at least one security key and the payload, or
- a signature algorithm such as an Elliptic Curve Digital Signature Algorithm (known by the acronym "ECDSA") in order to compute this tag based also on the said at least one security key and the payload.

It should be noted that the system 100 includes a communication network 121 participating in the establishment of a communication link between the first and the second devices 101, 102. This communication network 121 is preferably a Bluetooth communication network, or a wired and a wireless communication network not compatible with the Bluetooth.

The system 100 can also comprise a third electronic device 103. This third device 103 is capable to participate to at least one security key exchange between the first and the second device 101, 102, to distribute this at least one security key to these first and second devices 101, 102.

In this context, the device 103 can be a configuration device and/or a programming device. For example in the TPMS system this device 103 can be a TPMS programming tool in a workshop, a smartphone or a programming device in a production line or a TPMS configuration tool.

This third device 103 comprises in a non-limiting and/or non-exhaustive manner:
- a processing unit 122 (also referred to as a "controller") including hardware and software resources, in particular at least one processor 125 cooperating with memory elements 126;
- a Bluetooth communication interface 123;
- a wired and a wireless communication interfaces not compatible with the Bluetooth standard 124.

In this third device 103, the processing unit 122 is connected to the Bluetooth communication interface 123 and the wired and the wireless communication interfaces 124 not compatible with the Bluetooth standard.

According to some embodiments, the first, the second or the third device 101, 102, 103 can also comprise in the memory element 112, 119, 126 of its processing unit 104, 105, 122 the said at least one security key intended to secure the message.

Furthermore, the system 100 comprises two communication networks 127, 128 participating in the establishment of a communication link between the third and first devices 103, 101, and between the third and second devices 103, 102 respectively. These communication networks 127, 128 are preferably a Bluetooth communication network, or a wired and a wireless communication network not compatible with the Bluetooth.

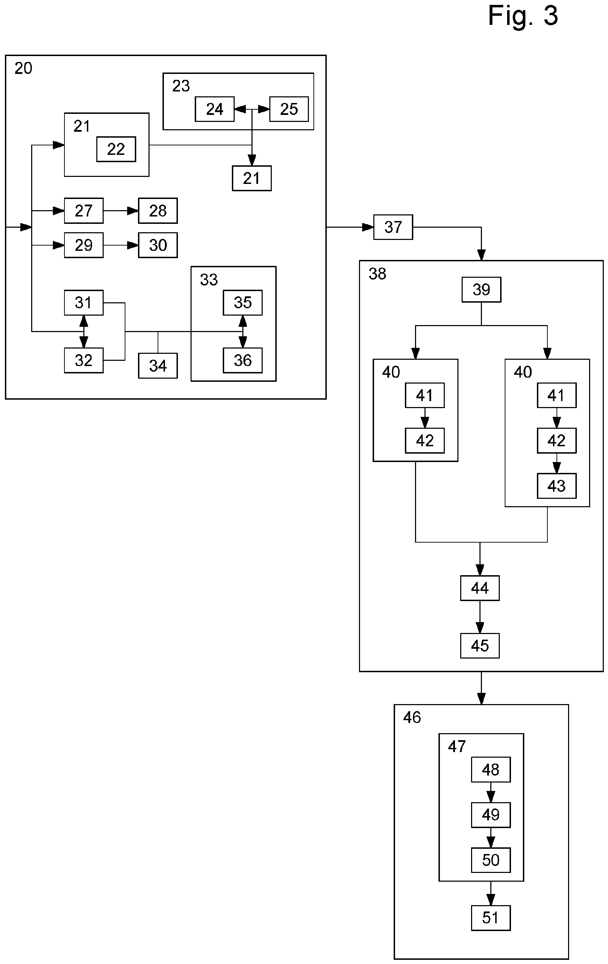

Referring now to Figures 3 to 9, the system 100 is capable of implementing this Bluetooth communication method. Such a method starts with a step of obtaining 20 the said at least one security key by each of the first and second devices 101, 102. Such a step of obtaining 20 preferably comprises five embodiments.

More specifically in a first and second embodiments illustrated in the Figures 4 and 5, this step 20 includes a sub-step of establishing 21 a communication link in a Bluetooth connected mode between the first and second devices 101, 102. To that end, this sub-step 21 includes a phase of pairing 22 of the first device 101 with the second device 102.

In this context, the Bluetooth connected mode referenced C in the Figures 4 to 9, can be defined as being a connection that allows bi-directional data transfer between the two connected devices. In connected mode, the data transferred can be secured but not necessarily. Transferred data can be protected in integrity or\and in confidentiality.

This sub-step 21 is automatically implemented the first time that first device 101 receives a connection request from the second device 102 with which it is not yet paired. During this sub-step 21, the first device 101 detects the presence of the second device 102, which is in its vicinity and attempts to establish a connection with this last one. To this end, the second device 102 is set in a discoverable mode. Subsequently, during this phase of pairing 22, the first 101 or second device 102 and more specifically its processing unit 104, 105 is capable to generate several keys such as for example a Long Temporary Key, an Identity Resolving Key, a Connection Signature Resolving Key and/or a Diffie-Hellman key.

In the first embodiment, the step of obtaining 20 comprises a sub-step of exchanging 23 the said at least one security key between these first and second devices 102. This sub-step 23 includes:
- a phase of transmitting 24 the said at least one security key by the first device 101 to the second device 102, or
- a phase of transmitting 25 the said at least one security key by the second device 102 to the first device 101.

In this context, the said at least one security key can be a key already stored in the processing unit 104, 105 of the first or second device 101, 102 such as for example an Advanced Encryption Standard key. In an alternative, the said at least one security key can also be a key generated during the phase of pairing 22 or derived from that key generated.

In the second embodiment, the step of obtaining 20 comprises a sub-step of generating 26 the said at least one security key by the first and the second devices 101, 102 by implementing a key agreement protocol. This key agreement protocol can be based on a cryptographic algorithm such as for example the Diffie-Hellman algorithm.

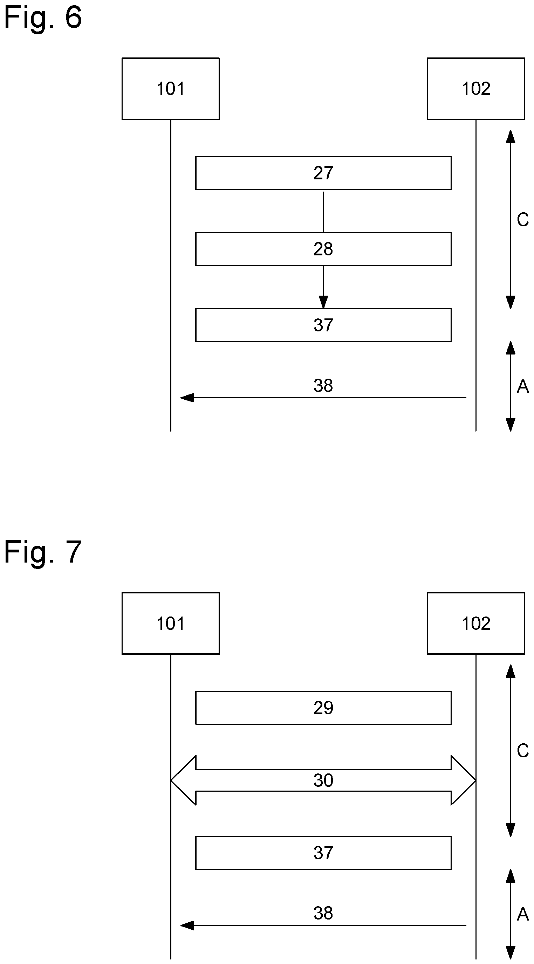

In reference to Figure 6, regarding a third embodiment of this step of obtaining 20 which is similar to the second embodiment, it is expected that the sub-step of establishing 21 a communication is replaced by a sub-step of establishing 27 a communication link between the first and second devices 101, 102 from a wired technology or a wireless technology standard different from the Bluetooth standard. After this sub-step 27, this third embodiment includes in the same way of this second embodiment, a sub-step of generating 28 the said at least one security key by the first and the second devices 101, 102 by implementing a key agreement protocol.

In a fourth embodiment illustrated in Figure 7, the step of obtaining 20 also includes as in the third embodiment, a sub-step of establishing 29 a communication link between the first and second devices 101, 102 from a wired technology or a wireless technology standard different from the Bluetooth standard. Afterwards, the step of obtaining 20 comprises a sub-step of exchanging 30 the said at least one security key between these first and second devices 101, 102, the said at least one security key being :
- initially stored in the first or second device 101, 102, or
- a key generated during a phase of pairing when the step of obtaining 20 comprises a previous phase of pairing implemented between the first and second devices 101, 102, or
- derived from that key generated.

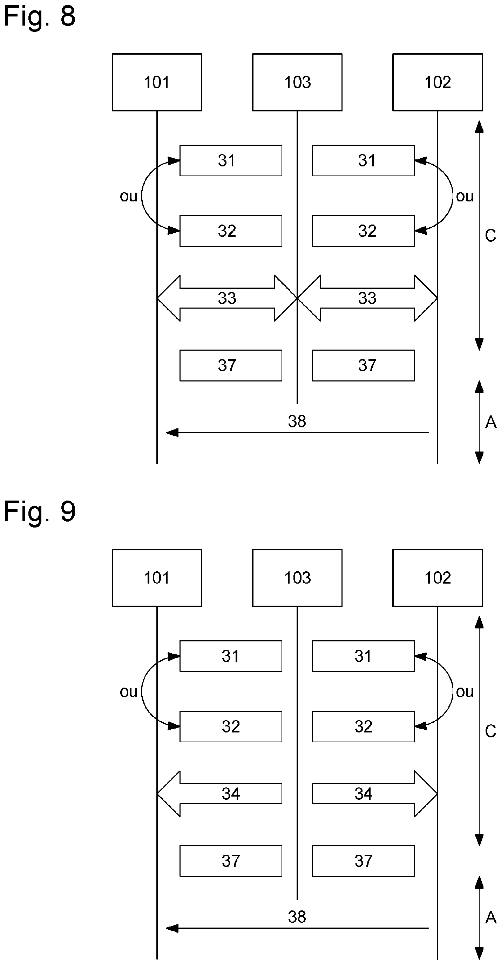

In a fifth embodiment of the step of obtaining 20 depicted in the Figures 8 and 9, this step 20 comprises:
- a sub-step of establishing 31 a communication link in a Bluetooth connected mode between the first, second and third devices 101, 102, 103, this sub-step 31 including a phase of pairing of the third device 103 with the first electronic device 101 and with the second electronic device 102, or
- a sub-step of establishing 32 a communication link between the first, second and third devices 101, 102, 103 from a selection of a communication technology carried out by each of these devices 101, 102, 103 among a secure wired technology or a secure wireless technology different from the Bluetooth technology or a Bluetooth technology.

In this fifth embodiment, the step of obtaining 20 comprises subsequently:
- a sub-step of exchanging 33 the said at least one security key through the communication link between the first and second devices 101, 102 through the third electronic device 103, or
- a sub-step of distributing 34 the said at least one security key by the third electronic device 103 to the first and second devices 101, 102 through the communication link.

The sub-step of exchanging 33 includes:
- a phase of transmitting 35 the said at least one security key by the first device 101 to the second device 102 through the third device 103, or
- a phase of transmitting 36 the said at least one security key by the second device 102 to the first device 101 through the third device 103.

In this context, the said at least one security key can be a key already stored in the processing unit 104, 105, 122 of the first 101, the second 102 or the third device 103 such as for example an Advanced Encryption Standard key. In an alternative, this said at least one security key can also be a key generated during the phase of pairing of this fifth embodiment, or derived from that key generated during this phase. It can be noticed that during this phase, the first 101, the second 102 or the third device 103 and more specifically its processing unit 104, 105, 122 are capable to generate several keys like for example a Long Temporary Key, an Identity Resolving Key, a Connection Signature Resolving Key and/or a Diffie-Hellman key.

Then, the method comprises a step of interrupting 37 the communication link between the first and the second devices 101, 102 as long as the said at least one security key is valid. It may be noted that the communication link between the first and the second devices 101, 102 is directly interrupted when these two devices 101, 102 are connected to each other without an intermediate device as in the first to the four embodiments mentioned above. In the same approach, this communication link between the first and the second devices 101, 102 is indirectly interrupted when these two devices 101, 102 are connected to each other through the third device 103 as in the fifth embodiment mentioned above.

It is understood that this said at least one security key is considered as being valid once the two devices 101 and 102 agree on the key material. It can be either a shared secret key or a private-public key pair.

Thus, once the said at least one security key is valid, it is not required in this method to implement a sub-step of establishing 21, 27, 29, 31, 32 a communication link between the first and second devices 101, 102 or between the first, the second and the third devices 101, 102, 103:
- in a Bluetooth connected mode, or
- from a secure wired technology or a secure wireless technology different from the Bluetooth technology.

Furthermore, the method comprises a step of transmitting 38 a secure message by the second device 102 to the first device 101. Such a step 38 includes a sub-step of realisation 39 of a message comprising a payload including data relating to phenomenon data or notification data.

Then, this step 38 comprises a sub-step of designing 40 the secure message by using the said at least one security key and the payload. To do that, this sub-step 40 comprises a phase of computing 41 a secure tag by implementing a tag algorithm using the said at least one security key and the payload. This secure tag is a short piece of information, which contributes to ensure an integrity and/or an authenticity protection to the message comprising the payload. This secure tag comprises a Message Authentication Code (known under the acronym MAC) also called Message Integrity Code (known under the acronym MIC) or a signature. During this phase 41, the processing unit 105 of the second device 102 can execute this tag algorithm - for example, a MAC algorithm or a signature algorithm - which implements the said at least one security key and the payload in order to compute this secure tag.

Then, this sub-step 40 comprises a phase of generating 42 the secure message by appending the computed tag to:
- the payload, or,
- an encrypted payload, when this subs-step of designing 40 includes a phase of encrypting 43 the payload and/or the tag from an encryption algorithm using the said at least one security key.

It should be noted that the payload and the tag could be also encrypted during this phase of encrypting 43. In this case, the sub-step referenced 40 comprises a phase of generating 42 the secure message by encrypting the computed tag appended to the payload. For example in this context, a first security key can be used to compute the security tag and a second security key to encrypt the payload and the tag.

When this phase of encrypting 43 is executed, the processing unit 105 of the second device 102 can implement this encryption algorithm in order to encrypt this payload by using the said at least one security key. Such a phase 43 contributes to ensure a confidentiality protection to the message comprising the payload.

Once the secure message has been constructed, the step of transmitting 38 provides the implementation of a sub-step of establishing 44 a communication link in a Bluetooth advertising mode between these first and second devices 101, 102. Subsequently, the step of transmitting 38 comprises a subs-step of advertising 45 the secure message to the first device 101 by the second device 102.

Then the method comprises a step of processing 46 the data comprised in the secure message received by the first device 101 from the second device 102. This step 46 includes a sub-step of extracting 47 the payload comprised in the secure message received.

This sub-step 47 comprises a phase of processing 48 a secure tag by implementing a tag algorithm using the said at least one security key and the payload contained in the secure message. During this phase 48, in order to compute this tag the processing unit 104 of the first device 101 can implement this tag algorithm - for example the MAC algorithm or the signature - using the said at least one security key and the payload of the secure message.

Then sub-step comprises a phase of verifying 49 the consistency of the tag contained in the secure message. Consistency is verified either comparing the computed tag with the received tag, or verifying the validity of the received signature tag. If the tag containers in the secure message is valid, the processing unit 104 of first device 101 can safely assume that the message was not altered or tampered with during transmission. In other words, the integrity and/or the authenticity of this message and more specifically of the payload, can be considered as not altered.

The sub-step 47 can comprise a phase of decrypting 50 the encrypted payload contained in the secure message received, when the subs-step of designing 40 includes the phase of encrypting the payload.

During this phase of decrypting 50, the processing unit 104 of the first device 101 can implement the corresponding decryption algorithm in order to decrypt this encrypted payload by using the said at least one security key. In this way, the confidentiality protection of the message and more particularly of the payload is ensured. In this sub-step 47, this phase 50 is executed before the phase of processing 48 the secure tag which needs a decrypted payload to be implemented.

It should be noted that, the phase of decrypting 50 can be executed before the phase of processing 48 a secure tag, if the tag and the payload contained in the secure message received have been encrypted during the subs-step of designing 40.

Then, the step of processing 46 includes sub-step of generating 51 useful information based on the data contained in the payload of this secure message. This useful information can be used in a biological or physical parameters monitoring system such as a TPMS system.

It will be apparent to those skilled in the art that various modifications may be made in the present disclosure, without departing from the spirit or the scope of the disclosure. Thus, it is intended that the present disclosure covers modifications and variations of embodiments of the present disclosure. For instance, the method may provide that the secure message advertised comprises only an encrypted payload without a secure tag.

## Claims

1. A Bluetooth communication method implemented between a first electronic device (101) and a second electronic device (102), this second electronic device (102) being capable of sending a secure message comprising data to be processed by the first electronic device (101), the method comprising:
- obtaining (20) at least one security key by each of the first and second electronic devices (101, 102);
- transmitting (38) the secure message by the second electronic device (102) to the first electronic device (101) comprising establishing (44) a communication link in a Bluetooth advertising mode between these first and second devices (101, 102).

2. The method according to claim 1, **characterised in that** the step of obtaining (20) comprises:
- a sub-step of establishing (21) a communication link in a Bluetooth connected mode between the first and second devices (101, 102), this sub-step (21) comprising a phase of pairing (22) of the first device (101) with the second device (102), and
- a sub-step of exchanging (23) the said at least one security key between these first and second devices (101, 102), the said at least one security key being:
• initially stored in the first or second device (101, 102), or
• a key generated during the phase of pairing (22), or
• derived from that key generated.

3. The method according to claim 1, **characterised in that** the step of obtaining (20) comprises:
- a sub-step of establishing (21) a communication link in a Bluetooth connected mode between the first and second devices (101, 102), and
- a sub-step of generating (26) the said at least one security key by the first and the second devices (101, 102) by implementing a key agreement protocol.

4. The method according to claim 1, **characterised in that** the step of obtaining (20) comprises:
- a sub-step of establishing (27) a communication link between the first and second devices (101, 102) from a wired technology or a wireless technology standard different from the Bluetooth standard, and
- a sub-step of generating (28) the said at least one security key by the first and the second devices (101, 102) by implementing a key agreement protocol.

5. The method according to claim 1, **characterised in that** the step of obtaining (20) comprises:
- a sub-step of establishing (29) a communication link between the first and second devices (101, 102) from a wired technology or a wireless technology standard different from the Bluetooth standard, and
- a sub-step of exchanging (30) the said at least one security key between these first and second devices (101, 102), the said at least one security key being:
• initially stored in the first or second device (101, 102), or
• a key generated during a phase of pairing when the step of obtaining comprises a previous phase of pairing implemented between the first and second devices (101, 102), or
• derived from that key generated.

6. The method according to claim 1, **characterised in that** the step of obtaining (20) comprises:
- a sub-step of establishing (31) a communication link in a Bluetooth connected mode between the first, second and third devices (101, 102, 103), this sub-step (31) including a phase of pairing of the third device (103) with the first electronic device (101) and the second electronic device (102), and
- a sub-step of exchanging (33) the said at least one security key through the communication link between the first and second devices (101, 102) through the third electronic device (103).

7. The method according to claim 1, **characterised in that** the step of obtaining comprises:
- a sub-step of establishing (32) a communication link between the first, second and third devices (101, 102, 103) from a selection of a communication technology carried out by each of these devices (101, 102, 103) among a secure wired technology or a secure wireless technology different from the Bluetooth technology or a Bluetooth technology;
- a sub-step of exchanging (33) the said at least one security key through the communication link between the first and second devices (101, 102) through the third electronic device (103).

8. The method according to claim 6 and 7, **characterised in that** the sub-step of exchanging (33) is replaced by a sub-step of distributing (34) the said at least one security key by the third electronic device (103) to the first and second devices (101, 102) through the communication link.

9. The method according to any one of the claims 1 to 8, **characterised in that** the step of transmitting (38) comprises:
- a sub-step of realisation (39) of a message comprising a payload including data relating to phenomenon data or notification data, and
- a sub-step of designing (40) the secure message by using the said at least one security key and the payload.

10. The method according to the preceding claim, **characterised in that** the sub-step of designing (40) comprises:
- a phase of computing (41) a secure tag by implementing a tag algorithm using the said at least one security key and the payload, and
- a phase of generating (42) the secure message by appending the computed tag to the payload, or
- a phase of generating (42) the secure message by appending the computed tag to the encrypted payload, or
- a phase of generating (42) the secure message by encrypting the computed tag appended to the payload.

11. The method according to the preceding claims, **characterised in that** it comprises a step of processing (46) the data comprised in the secure message received by the first device (101) from the second device (102).

12. The method according to the preceding claims, **characterised in that** the step of processing (46) comprises:
- a sub-step of extracting (47) the payload from the secure message received , and
- a sub-step of generating (51) useful information based on the data contained in the payload of this secure message.

13. A Bluetooth communication system (100) implemented between a first electronic device (101) and a second electronic device (102), this second electronic device (102) being capable of sending a secure message comprising data to be processed by the first electronic device (101), the system (100) comprising these first and second devices (101, 102) and configured to:
- obtaining at least one security key by each of the first and second electronic devices (101, 102);
- transmitting the secure message by the second electronic device (102) to the first electronic device (101) comprising establishing a communication link in a Bluetooth advertising mode between these first and second devices (101, 102).

14. The system (100) according to preceding claim, **characterised in that** it comprises the first and second devices (101, 102) and also a third electronic device (103), the system (100) being configured to:
- exchanging the said at least one security key through the communication link between the first and second devices (101, 102) through the third electronic device (103), or
- distributing the said at least one security key by the third electronic device (103) to the first and second devices (101, 102) through the communication link.
